# EUROPÄISCHE PATENTANMELDUNG

(11) **EP 2 790 007 A1**
(43) Veröffentlichungstag der Anmeldung: **15.10.2014**
(21) Anmeldenummer: 14163649.8
(22) Anmeldetag: 05.04.2014
(51) Int. Cl.: G01N 21/47, G01N 15/10

(54) **System bestehend aus einer Kalibriereinheit in Kombination mit einem streulichtbasierten Partikelmessgerät zur Messung von polydispersen Agglomeraten in gasförmigen Medien**

(30) Priorität: 11.04.2013 EP 13163384
(71) Anmelder: SAXON Junkalor GmbH, 06846 Dessau-Roßlau (DE)
(72) Erfinder: Dipl.-Ing. Manzei, Uwe, 06385 Aken (DE); Dipl.-Ing. Egert, René, 39418 Stassfurt (DE); Dipl.-Ing. Schapitz, Lutz, 06847 Dessau-Rosslau (DE)
(74) Vertreter: Tragsdorf, Bodo

(57) **Zusammenfassung**

Die Erfindung bezieht sich auf ein System bestehend aus einer Kalibriereinheit in Kombination mit einem streulichtbasierten Partikelmessgerät zur Messung von polydispersen Agglomeraten in gasförmigen Medien.

Ausgehend von den Nachteilen des bekannten Standes der Technik soll ein System geschaffen werden, mit dem es ermöglicht wird, kostengünstig und wiederholbar Partikelmess-geräte zu prüfen und zu kalibrieren.

Hierzu wird als Lösung ein System als Kombination eines Partikelmessgerätes mit einem Kalibrierstift als Kalibriereinheit mit folgenden Merkmalen vorgeschlagen.

Das Partikelmessgerät 14 besitzt eine von Partikeln in einem gasförmigen Medium durchströmbare Messkammer 18 mit einer Laserstrahlungsquelle 15 sowie einem oder mehreren Detektoren 16. Außerdem gehören zum Partikelmessgerät noch als wesentliche Bestandteile eine Entnahmesonde, eine Pumpe zum Gastransport, ein Feinfilter und eine elektronische Steuer- und Recheneinheit, die mit einem Anzeige- und Eingabefeld in Verbindung steht.

Zur Kalibrierung des Partikelmessgerätes wird in die Messkammer 18 passgenau als Kalibriereinheit ein Kalibrierstift 1 mit einer optischen Einheit, bestehend aus einem Kalibrierstrahler 10 und einem Kalibrierdetektor 11, sowie einer elektronischen Steuer- und Recheneinheit und einer Multifunktionsanzeige eingesetzt und arretiert.

## Beschreibung

Die Erfindung bezieht sich auf ein System bestehend aus einer Kalibriereinheit in Kombination mit einem streulichtbasierten Partikelmessgerät zur Messung von polydispersen Agglomeraten in gasförmigen Medien, wobei mittels der Kalibriereinheit Strahlungsquelle und Detektor(en) des Partikelmessgerätes vor der Messung kalibriert werden. Partikelmessgeräte vorgenannter Art sind an sich bekannter Stand der Technik.

Ein entsprechendes Messgerät ist mit einer Lichtquelle ausgerüstet, die Licht in eine Messkammer strahlt, durch die der zu messende Partikelstrom geleitet wird.

Die von den Partikeln reflektierte Strahlung, in der Regel elektromagnetische Strahlung im sichtbaren Bereich, wird einem oder mehreren Detektoren zugeführt. Über den Detektor steht dann ein verstärktes Spannungssignal zur Verfügung. Dieses Spannungssignal ist direkt proportional zur Massenkonzentration des Partikelstromes in der Messkammer. Ausgehend von den ermittelten Spannungssignalen können über Algorithmen verschiedene Parameter des Partikelstroms ermittelt werden. Dies können die Masse der Partikel je Volumeneinheit, die Größenverteilung der Partikel oder andere Parameter sein.

Die Erstjustierung der entsprechenden (Master-)Streulichtgeräte basiert meist auf der Realmessung von Partikeln.

Messgeräte, die für amtliche Messungen bestimmt sind, unterliegen der Eichpflicht und müssen in bestimmten Zeitabständen einer Kalibrierung unterzogen werden.

Aus der Praxis ist bekannt, dass mit Teststäuben gearbeitet wird und die erzielten Ergebnisse mit denen gravimetrischer Staubmessgeräte verglichen werden, um die Partikelmessgeräte zu kalibrieren. Bei kleinen Staubkonzentrationen sind Messungen über lange Zeiträume (bis zu einer Stunde) notwendig, um einigermaßen auswertbare Ergebnisse zu erhalten. Dies ist mit einem hohen Zeitaufwand und erheblichen Kosten verbunden.

Eine andere Möglichkeit zur Partikelstromsimulation besteht darin, über definierte transmittierende oder reflektierende Streukörper definierte Streustrahlungen zu erzeugen, die einer vorgegebenen bekannten Partikelkonzentration entsprechen (DE 10 2011 002 421 A1 und DE 10 2010 002 423 A1). Der Streukörper wird im Bereich des Partikeldurchgangs in die Messkammer eingesetzt und simuliert eine definierte Partikelkonzentration. Zur Herstellung der Streukörper ist eine hochpräzise Fertigung erforderlich. Die Streukörper sind daher sehr kostenintensiv und wirken sich nachteilig auf die Wirtschaftlichkeit der Kalibrierung aus. Für einen Einsatz in mehreren Prüfstellen erweist sich die Reproduktion des Streukörpers als schwierig.

Der Erfindung liegt die Aufgabe zugrunde, ein System bestehend aus einer Kalibriereinheit in Kombination mit einem streulichtbasierten Partikelmessgerät zur Messung von polydispersen Agglomeraten in gasförmigen Medien zu schaffen, mit dem es ermöglicht wird, kostengünstig und wiederholbar Partikelmessgeräte zu prüfen und zu kalibrieren. Ferner soll das System mit geringem technischen Aufwand eine Kalibrierung mit sehr gut reproduzierbaren Werten und in der Praxis eine einfache, sichere und kostengünstige Anwendung ermöglichen.

Erfindungsgemäß wird die Aufgabe durch die im Anspruch 1 angegebenen Merkmale gelöst. Vorteilhafte Ausgestaltungen und Weiterbildungen des Systems sind in den Ansprüchen 2 bis 15 angegeben.

Das erfindungsgemäße System umfasst als Kombination ein streulichtbasiertes Partikelmessgerät mit einem Kalibrierstift als Kalibriereinheit.

Das Partikelmessgerät besitzt mindestens eine von Partikeln in einem gasförmigen Medium durchströmbare Messkammer mit einer Laserstrahlungsquelle, einem oder mehreren Detektoren und einer elektronischen Steuer- und Recheneinheit, eine Entnahmesonde, eine Pumpe zum Gastransport und einen Feinfilter, die in innerhalb eines Gehäuses mit einem Anzeige- und Eingabefeld angeordnet sind. Zur Kalibrierung des Partikelmessgerätes ist in die Messkammer passgenau ein Kalibrierstift mit einer optischen Einheit, bestehend aus einem Kalibrierstrahler und einem Kalibrierdetektor, sowie einer elektronischen Steuer- und Recheneinheit und einer Multifunktionsanzeige eingesetzt und arretiert.

Im Vergleich zu bekannten Verfahren ist es nunmehr möglich, eine kostengünstige und wiederholbare Prüfung und Kalibrierung der Partikelmessgeräte vorzunehmen.

Mit dem Kalibrierstift als Kalibriereinheit steht eine Möglichkeit zur Verfügung, prüf- bzw. eichpflichtige im Einsatz befindliche Partikelmessgeräte zu prüfen und ggf. zu kalibrieren und zu eichen. Außer dem Kalibrierstift werden keine weiteren Prüf- oder Verbrauchsmittel benötigt.

Zur Prüfung der Strahlungsquelle des Partikelmessgerätes wird die von dieser abgegebene Strahlungsstärke mittels des Kalibrierdetektors gemessen. Die gemessenen Werte werden in der elektronischen Steuer- und Recheneinheit der Kalibriereinheit verarbeitet und dem Bediener als Korrekturempfehlung an der Kalibriereinheit angezeigt.

Zur Prüfung mindestens eines Detektors des Partikelmessgerätes wird vom Kalibrierstrahler eine Strahlung mit einer vorgegebenen Stärke als Sollwert abgegeben und vom Detektor gemessen. Die gemessenen Werte werden in der elektronischen Steuer- und Recheneinheit des Partikelmessgerätes im Ergebnis eines Ist-/Sollwert-Vergleiches verarbeitet und am Display des Partikelmessgerätes dem Bediener als Korrekturempfehlung angezeigt. In Abhängigkeit von den ermittelten Messwerten werden Strahlungsquelle und/oder Detektor nachjustiert.

Die Prüfung der Strahlungsquelle bzw. Prüfung eines oder mehrerer Detektoren des Partikelmessgerätes kann entweder einzeln oder in Kombination in zeitlicher Reihenfolge nacheinander vorgenommen werden.

Bei Partikelmessgeräten handelt es sich um Geräte zur Messung von Partikeln unterschiedlicher Art, insbesondere polydispergiertes Agglomerat von Primärteilchen, Partikel aus festen und/oder flüssigen Komponenten.

Die Partikelmessgeräte gemäß dem vorgeschlagenen Systems können für unterschiedli-che Anwendungen bestimmt sein. Beispielhaft sind folgende Anwendungen genannt:
- Staubmessung nach 1.BlmSchV (Kleinfeuerungsanlagen),
- Staubmessung nach TA-Luft,
- Partikelmessung im Rahmen von Abgasuntersuchungen und
- Staub- und Partikelmessgeräte für den Einsatz in der Prozesstechnik.

Die Erstjustierung der entsprechenden (Master-)Streulichtgeräte basiert in der Regel auf der Realmessung von Partikeln. Die Erstjustierung von Seriengeräten sowie die Nachprüfung im Praxiseinsatz befindlicher Geräte können nunmehr mit dem erfindungsgemäßen System in besonders wirtschaftlicher Weise vorgenommen werden.

Die vorliegende Erfindung basiert auf der Überlegung, dass nicht alle Teile des Messgerätes von Parameteränderungen (z.B. durch Altern, Temperaturschwankungen etc.) betroffen sind. Der unveränderliche Teil der Geräte beinhaltet Baugruppen und Komponenten, an denen auf Grund ihres Aufbaus bzw. ihrer Beschaffenheit keinerlei Änderungen, egal welcher Art (Ausnahme technische Defekte, die aber im Messgerät als Fehler behandelt werden können), auftreten können. Dies betrifft z.B. alle digitalen Signalwege und die implementierte Software und gilt auch für alle Geräte gleicher Bauart.

Der veränderliche Teil besteht aus Komponenten, die auf Grund von äußeren Einflüssen ihre Parameter verändern können. Dabei handelt es sich um die Strahlungsquelle und den bzw. die Detektoren eines Partikelmessgerätes. Nur diese Komponenten müssen im Rahmen der geltenden Vorschriften in bestimmten Zeitabständen einer Kalibrierung unterzogen werden.

Bei einer Prüfung der Strahlungsquelle des Partikelmessgerätes werden die Ergebnisse an der Kalibriereinheit über eine Multifunktionsanzeige visuell als farblich gekennzeichnete Bereiche "zu hohe Leistung", "zu geringe Leistung" und "Leistung korrekt" angezeigt. Ausgehend von diesen Informationen kann der Bediener die Strahlungsstärke der Strahlungsquelle im erforderlichen Maß verändern, also nachjustieren.

Bei einer Prüfung des Detektors wird zuerst am Partikelmessgerät die Betriebsart "Detektorkalibrierung" aktiviert und nach erfolgter Prüfung die gemessene Strahlungsstärke im Display des Partikelmessgerätes angezeigt. Ausgehend von dem angezeigten Messwert wird erforderlichenfalls der Detektor nachjustiert.

Ferner besteht die Möglichkeit, dass die Detektorempfindlichkeit des geprüften Detektors automatisch nachgeregelt wird.

Jeder geprüfte Detektor ist hinsichtlich der Empfindlichkeit automatisch nachregelbar.

Bei Partikelmessgeräten mit mehreren Detektoren können die einzelnen Detektoren zeitlich nacheinander kalibriert werden oder auch gleichzeitig. Bei letztgenannter Variante werden alle zu prüfenden Detektoren von nur einem Kalibrierstrahler angestrahlt.

Bei einer sogenannten "kombinierten Prüfung" wird zuerst die von der Strahlungsquelle des Partikelmessgerätes abgegebene Strahlungsstärke mittels des Kalibrierdetektors gemessen. Danach schaltet die Strahlungsquelle nach einer definierten Zeitdauer automatisch ab. Die Steuer- und Recheneinheit der Kalibriereinheit erkennt die Betriebsart "kombinierte Prüfung" und berechnet den Sollwert für die vom Kalibrierstrahler abzugebende Strahlungsstärke. Diese wird nachfolgend vom Kalibrierstrahler abgegeben und vom Detektor gemessen, wobei bei Abweichungen vom Sollwert der Detektor nachjustiert wird. Das erfindungsgemäße System kann für Partikelmessgeräte zum Einsatz kommen, die mit einer Laserstrahlung im Wellenbereich elektromagnetischer Strahlung oder UV-Strahlung arbeiten.

Jeder Detektor des Partikelmessgerätes kann an einer oder an mehreren Kennlinienpunkten kalibriert werden, indem vom Kalibrierstrahler sequentiell verschiedene Strahlungsstärken abgegeben werden.

Zur optischen Einheit gehört gegebenenfalls noch ein Diffusor, der einen größeren Lichtdurchsatz im UV-Bereich ermöglicht und das Licht bzw. die Strahlung gleichmäßig verteilt. Mit dem erfindungsgemäßen System wird im Vergleich zu bekannten Geräten eine kostengünstige und wiederholbare Möglichkeit, Partikelmessgeräte innerhalb kurzer Zeit (weniger als eine Minute) zu prüfen und zu kalibrieren, bereitgestellt.

Die Anschaffungskosten für die Kalibriereinheit sind im Vergleich zu ansonsten zum Einsatz kommender Geräte deutlich geringer.

Die Durchführung der Kalibrierung ist sehr einfach, da keine Teststäube oder andere Ersatzmittel für Partikelströme benötigt werden.

Von Vorteil ist die universelle Einsetzbarkeit der Kalibrierstifte, zumindest für Geräte unterschiedlicher Baugrößen eines Herstellers. Durch zusätzliche Adapter können die Kalibrierstifte auch für bereits im Einsatz befindliche Partikelmessgeräte angewendet werden. Der Kalibrierstrahler ist genau zentrisch und der Kalibrierdetektor parallel versetzt zu dem Kalibrierstrahler angeordnet. Kalibrierdetektor und Kalibrierstrahler ragen in die zentrale Austrittsöffnung, die sich in Einbaulage in der Messkammer des Partikelmessgerätes befindet. Die als Kalibrierstift ausgeführte Kalibriereinheit wird passgenau in die Messkammer des Partikelmessgerätes eingebracht und in endgültiger Einbaulage arretiert. Zusätzlich ist eine Stromversorgung vorgesehen.

Der Kalibrierstrahler und der Kalibrierdetektor sind über Schnittstellen mit der elektronischen Steuer- und Recheneinheit verbunden.

Mit dieser Kalibriereinheit können folgende Prüfungen durchgeführt werden:
- die Prüfung und Kalibrierung des oder der elektromagnetischen (meist optischen) Detektoren vom Entstehungsort des Lichtes (Durchgang der Partikel) bis zum Übergang auf einen digitalen Signalweg;
- die Einstellung des/der Nennwerte und der Linearität durch eine oder mehrere Parameter pro Detektor;
- die Messung der Intensität des die Partikel anstrahlenden Elementes.

Im Bereich der Austrittsöffnung der Kalibriereinheit erweist sich die Anordnung eines einstellbaren Diffusors als vorteilhaft, da das vom Kalibrierstrahler abgegebene Licht gleichmäßig auf den oder die Detektoren verteilt wird.

Die Kalibriereinheit ist als stiftförmiges Bauteil (sogenannter Kalibrierstift) ausgebildet. Der Kalibrierstift ist in seiner Geometrie auf die Gasauslassöffnung und Messkammer des Partikelmessgerätes abgestimmt. Zur Kalibrierung wird der Kalibrierstift in die Gasauslassöffnung des Partikelmessgerätes eingeführt und in Einbaulage arretiert.

Zur manuellen Handhabung des Kalibrierstiftes ist dieser mit einem Handgriff ausgerüstet, der sich an der zur optischen Einheit gegenüberliegenden, nach außen zeigenden Gehäusewand befindet. Außerdem ist am Gehäuse des Kalibrierstiftes eine Statusanzeige vorgesehen. Der Bediener kann die Messergebnisse als Statusanzeige somit unmittelbar am Kalibrierstift ablesen. Die Stromversorgung des Kalibrierstiftes erfolgt über eine Batterie. Im Gehäuse des Kalibrierstiftes ist dafür eine entsprechende Aufnahmeöffnung vorgesehen. Zur Inbetriebnahme des Kalibrierstiftes wird ein dafür vorgesehener Taster betätigt. Im Kalibrierstrahler können als Strahlungsquelle eine oder mehrere LED-Leuchtmittel oder Laserstrahler angeordnet sein.

Die Erfindung soll nachstehend an einem Ausführungsbeispiel erläutert werden. In der zugehörigen Zeichnung zeigen:
- Fig. 1: das zum System gehörende Partikelmessgerät in geöffneter perspektivischer Darstellung,
- Fig. 2: die in Fig. 1 angeordnete Messkammer als Einzelteil mit eingesetzter Kalibriereinheit, als Ansicht von unten
- Fig. 3: einen Schnitt gemäß der Linie B-B in Fig. 2,
- Fig. 4: die Kalibriereinheit in perspektivischer Darstellung,
- Fig. 5: die Kalibriereinheit als Ansicht von unten, in verkleinerter Darstellung,
- Fig. 6: einen Schnitt gemäß der Linie A-A in Fig. 2,
- Fig. 7: ein Funktionsschaltbild zur Kalibrierung der Strahlungsquelle eines Staubmessgerätes,
- Fig. 8: ein Funktionsschaltbild zur Kalibrierung des Detektors eines Staubmessgerätes und
- Fig. 9: ein Funktionsschaltbild zur kombinierten Kalibrierung der Strahlungsquelle des Detektors eines Staubmessgerätes.

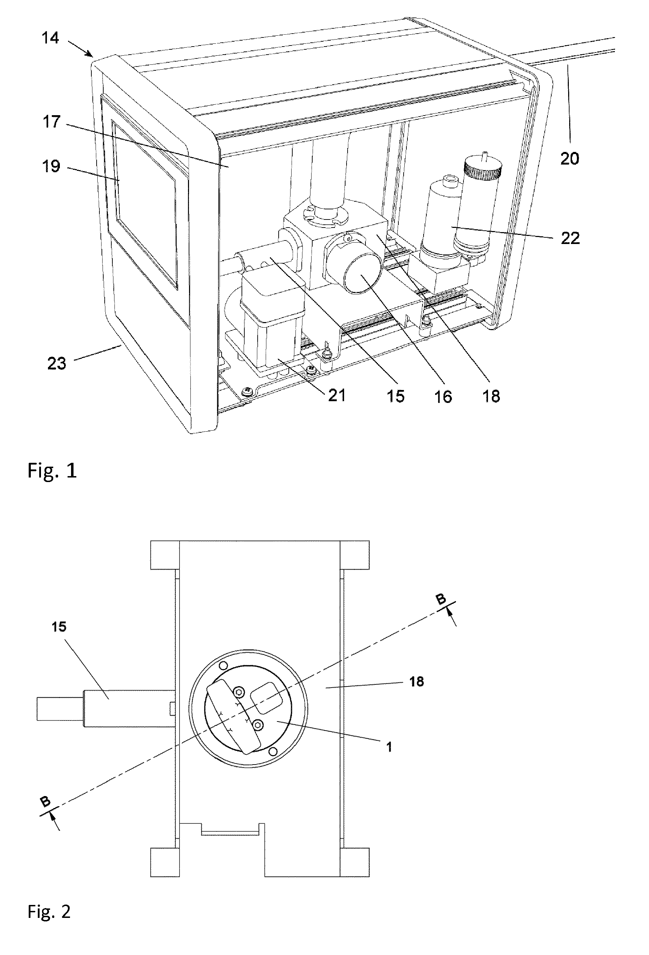

In Figur 1 ist der Aufbau eines Partikel- bzw. Staubmessgerätes 14 gezeigt. Im Gehäuse 23 ist die Messkammer 18 angeordnet, der im Betriebszustand über die mit einer Leitung verbundene Entnahmesonde 20 der Abgasstrom zur Messung der Partikelkonzentration zugeführt wird. Der Gastransport erfolgt mittels einer Pumpe 21. Das partikelhaltige gasförmige Medium strömt ungefiltert durch die Messkammer 18. In die Messkammer 18 ragen die Laserstrahlungsquelle 15 und ein Detektor 16, die in der gezeigten Ausführung um 90° versetzt angeordnet sind. Der Laser 15 bestrahlt die Partikel mit Licht definierter Wellenlänge. Die Partikel reflektieren, streuen und beugen das Laserlicht in alle Richtungen. Der Detektor 16 setzt das in bestimmte Richtungen gestreute Licht in elektrische Signale um. In der elektronischen Steuer- und Recheneinheit 17, die in Fig. 1 nur angedeutet ist, werden über die installierte Software aus den elektrischen Signalen die Partikelkonzentration und ggf. weitere Parameter ermittelt.

An einer der Stirnseiten befindet sich das Bedienpanel 19, das mit der elektronischen Steuer- und Recheneinheit 17 in Verbindung steht.

Nach dem Messvorgang wird das Abgas mittels eines Feinfiltersystems 22 gereinigt, bevor es in die Umgebung abströmt.

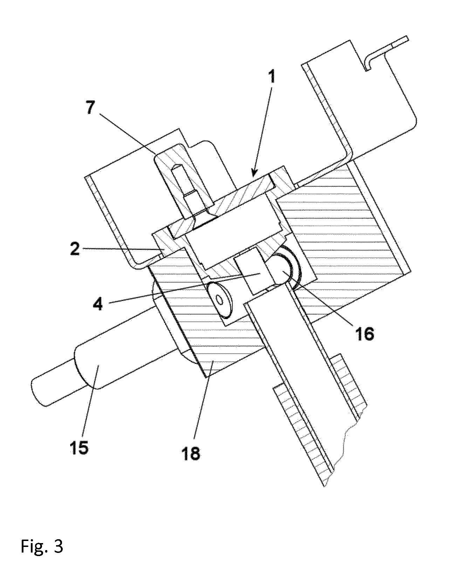

Gemäß der konstruktiven Auslegung der Messkammer 18 ist die Gasauslassöffnung vertikal nach unten gerichtet. Wie in den Figuren 2 und 3 zu sehen ist, wird dann, wenn das Partikelmessgerät kalibriert werden soll, in die Gasauslassöffnung die als Kalibrierstift 1 ausgeführte Kalibriereinheit eingesetzt und arretiert.

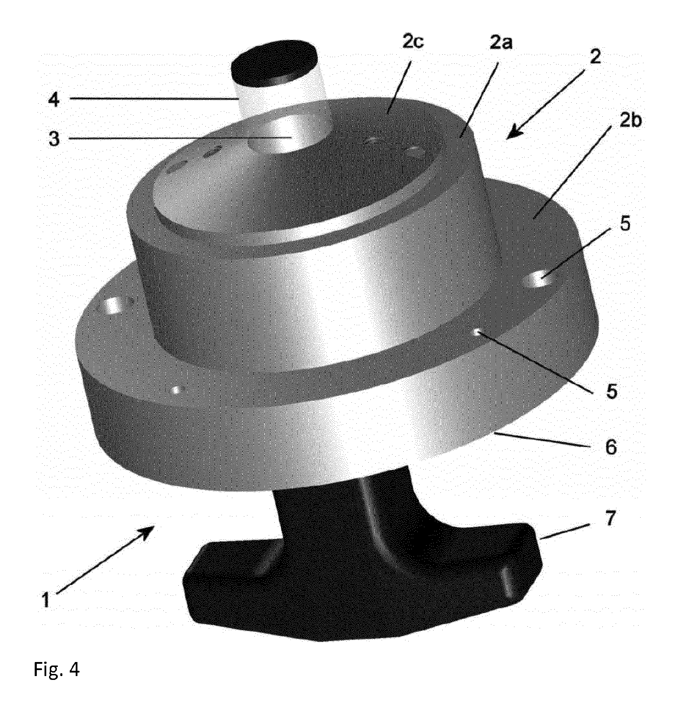

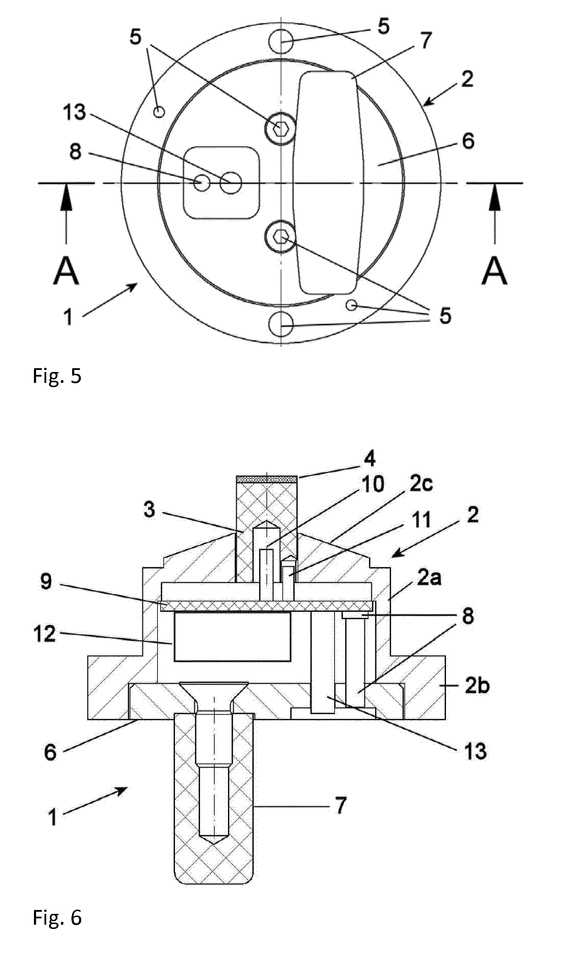

Nachfolgend wird der Kalibrierstift 1 unter Bezugnahme auf die Figuren 4 bis 6 näher erläutert. Der Kalibrierstift 1 besteht aus einem ringförmigen Gehäuse 2 mit einem die optischen Komponenten und die Steuer- und Recheneinheit aufnehmenden ersten Abschnitt 2a und einem zweiten Abschnitt 2b als ringförmiger Flansch. An seiner in die Messkammer des Partikelmessgerätes zeigenden Vorderseite ist eine leicht gewölbte Abdeckung 2c angeordnet. Der Kalibrierstrahler 10 ist zur Verbesserung des Lichtdurchsatzes mit einem Diffusor 4 ausgerüstet. Der ringförmige Flansch 2b besitzt radial verteilt mehrere durchgehende Befestigungslöcher 5 zur Aufnahme von Befestigungselementen für eine Arretierung in der Messkammer. An der nach außen zeigenden Stirnseite 6 des ringförmigen Flansches 2b ist zentrisch ein Handgriff 7 angeordnet. Außerdem befindet sich an der Stirnseite 6 die Multifunktionsanzeige 8 (Fig. 5). Im ersten Abschnitt 2a des Gehäuses 2 sind die Steuer- und Recheneinheit 9 sowie der Kalibierstrahler 10 und der Kalibrierdetektor 11 angeordnet (Fig. 6), die in die zentrale Austrittsöffnung 3 bzw. in den Diffusor 4 ragen und über eine Schnittstelle mit der Steuer- und Recheneinheit 9 in Verbindung stehen. Der Kalibrierstrahler 10 liegt genau in der Mittelachse der Austrittsöffnung 3 und der Kalibrierdetektor 11 ist zu diesem parallel versetzt angeordnet. Kalibrierstrahler und Kalibrierdetektor der Kalibiereinheit sind handelsübliche Bauteile.

Die Stromversorgung der Kalibriereinheit erfolgt über eine in die Aufnahme 12 einsetzbare Batterie in Form einer Knopfzelle. Über einen manuell betätigbaren Taster 13 wird die Kalibriereinheit nach dem Einsetzen in die Messkammer des Partikelmessgerätes und abschließender Arretierung in Betrieb genommen.

Die Kalibriereinheit (ohne Handgriff) hat z.B. folgende Abmessungen: Länge 40 mm, Durchmesser erster Abschnitt 2a 40 mm, Durchmesser zweiter Abschnitt 2b 60 mm.

Vor dem praktischen Einsatz des Kalibrierstiftes bzw. der Kalibriereinheit ist es in an sich üblicher Praxis erst erforderlich, diese zu kalibrieren, also den/die Kalibrierdetektor(en) und den Kalibrierstrahler.

Hierzu werden sogenannte Mastergeräte als qualifizierte Partikelmessgeräte eingesetzt. Die in dem Prozessrechner der Mastergeräte implementierte Software enthält die korrekten Berechnungsformeln, abgestimmt auf die Ausgangssignale ihrer Detektoren.

Zur Justierung des/der Kalibrierdetektor(en) werden für die Mastergeräte Detektorausgangswerte definiert, die im Bereich der typischen Ausgangssignale bei der realen Partikelmessung liegen. Die Kalibriereinheit wird nun in die Messkammer des Mastergerätes eingebracht und die Helligkeit des Kalibrierstrahlers so lange angepasst, bis der Detektor genau den definierten Wert liefert. Dieser Vorgang wird sequenziell für jeden Detektor wiederholt. Der Kalibrierstrahler wird mit einem zertifizierten Strahlungsmessgerät eingestellt bzw. kalibriert. Die ermittelten Sollwerte für Kalibrierstrahler und Kalibrierdetektor(en) werden in der Steuer- und Recheneinheit des Kalibrierstiftes gespeichert.

Die nunmehr justierte Kalibriereinheit wird z.B. an Prüfstellen geliefert und zur Prüfung bzw. Kalibrierung von im Einsatz befindlicher Partikelmessgeräte eingesetzt.

Hier kommt nun die Kalibriereinheit des erfindungsgemäßen Systems zum Einsatz.

Zur Prüfung eines Staubmessgerätes wird die Kalibriereinheit in die Messkammer des Staubmessgerätes eingebracht. Das Staubmessgerät wird in den Modus "Sensorkontrolle" versetzt.

Der Bediener in der Prüfstelle kann nunmehr die Strahlungsquelle und den Detektor des Staub- bzw. Partikelmessgerätes prüfen bzw. kalibrieren, entweder einzeln oder in Kombination.

Anstelle eines Detektors können auch mehrere Detektoren nacheinander oder gleichzeitig geprüft werden.

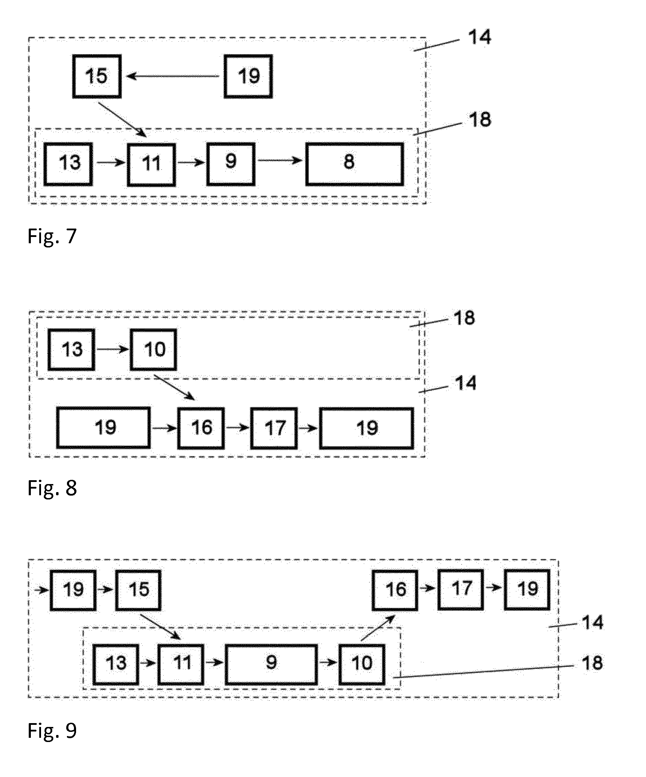

Nachfolgend werden die Prüf- bzw. Kalibriervorgänge, unter Bezugnahme auf die in den Figuren 7 bis 9 gezeigten Funktionsschaltbilder, erläutert.

### A Prüfung der Laser-Strahlungsquelle

Wie in Fig. 7 gezeigt, werden vom Bediener am Staubmessgerät 14 die Laser-Strahlungsquelle 15 und durch Betätigung des Tasters 13 die Kalibriereinheit 1 aktiviert. Der in die Messkammer 18 eingesetzte Kalibrierdetektor 11 erkennt das über die Strahlungsquelle 15 gesendete Licht und misst die Lichtstärke als Strahlungsleistung. Die gemessenen Werte (Istwerte) werden in digitale Signale umgewandelt und in der Steuer- und Recheneinheit 9 verarbeitet, wobei ein Vergleich mit den hinterlegten Sollwerten erfolgt. Die Messung erfolgt in der Regel über einen Zeitraum von 30 Sekunden.

Entsprechend den erzielten Ergebnissen wird dem Bediener über die Multifunktionsanzeige 8 der Status des Lasers mittels farblicher Kennzeichnung angezeigt (rot: zu hohe Leistung, orange: zu geringe Leistung, grün: Leistung korrekt).

Der Bediener korrigiert am Bedienpanel 19 des Staubmessgerätes die Laserleistung, bis die grüne Kennzeichnung aufleuchtet.

Die Prüfung der Laser-Strahlungsquelle ist somit abgeschlossen.

### B Prüfung des/der Detektor(en)

Zur Prüfung der Detektoren des Staubmessgerätes 14 wird der Kalibrierstift 1 in die Messkammer 18 eingesetzt und am Bedienpanel 19 des Staubmessgerätes der Modus "Detektorkalibrierung" aktiviert und durch manuelle Betätigung des Tasters 13 der Kalibrierstift 1 in Betrieb genommen (Fig. 8). Dieser erkennt automatisch den gewählten Modus und vom Kalibrierstrahler 10 wird auf jeden zu prüfenden Detektor 16 nacheinander eine Lichtstrahlung definierter Lichtstärke abgegeben. Von jedem Detektor 16 wird die Lichtstärke gemessen und die Messwerte als digitale Signale an die Steuer- und Recheneinheit 17 übermittelt und dem Bediener am Bedienpanel 19 des Staubmessgerätes 14 für jeden Detektor 16 als Zahlenwert angezeigt.

Anhand der ausgegebenen Analog-Signale justiert der Bediener den entsprechenden Detektor nach. Mittels einer Vergleichsmessung kann die vorgenommene Justierung nochmals überprüft werden. Sofern eine Nachjustierung erforderlich ist, so erfolgt diese in der Regel beim Hersteller der Geräte.

### C Kombinierte Prüfung von Strahlungsquelle und Detektor(en)

Bei der kombinierten Prüfung wird mittels des in die Messkammer 18 des Staubmessgerätes 14 eingesetzten Kalibrierstiftes die aktuelle Leistung der Laser-Strahlungsquelle 15 ermittelt. Nach dem Einschalten des Staubmessgerätes 14 am Bedienpanel 19 und des Kalibriertstiftes mittels des Tasters 13 sendet die Strahlungsquelle 15 Laserlicht, das vom Kalibrierdetektor 11 gemessen wird (Fig. 9).

Die Strahlungsquelle 15 schaltet nach einer vorgegebenen Zeitdauer automatisch ab. Der Kalibrierstift erkennt den Status "kombinierte Prüfung" und die Steuer- und Recheneinheit 9 ermittelt die vom Kalibrierstrahler 10 abzugebende Lichtstärke (Sollwert). Der Kalibrierstrahler 10 strahlt nachfolgend das Licht auf den/die Detektoren 16, die die Lichtstärke messen und die Messwerte als Signale an die Steuer- und Recheneinheit 17 des Staubmessgerätes weitergeben. Die Messwerte werden dem Bediener am Bedienpanel 19 des Staubmessgerätes 14 angezeigt, bei Abweichungen des Istwertes vom Sollwert für den einzelnen Detektor veranlasst der Bediener die entsprechende Justierung des betreffenden Detektors.

## Patentansprüche

1. System bestehend aus einer Kalibriereinheit in Kombination mit einem streulichtbasierten Partikelmessgerät zur Messung von polydispersen Agglomeraten in gasförmigen Medien, wobei das Partikelmessgerät eine vom gasförmigen Medium durchströmbare Messkammer (18) mit einer Laserstrahlungsquelle (15), einen oder mehrere Detektoren (16), eine elektronische Steuer- und Recheneinheit (17) sowie eine Entnahmesonde (20), eine Pumpe (21) zum Gastransport und einen Feinfilter (22) aufweist, die in einem Gehäuse (23) mit einem Anzeige- und Eingabefeld (19) angeordnet sind, und zur Kalibrierung des Partikelmessgerätes in die Messkammer (18) passgenau als Kalibriereinheit ein Kalibrierstift (1) mit einer optischen Einheit bestehend aus einem Kalibrierstrahler (10) und einem Kalibrierdetektor (11), sowie einer elektronischen Steuer- und Recheneinheit (9) und einer Multifunktionsanzeige (8) eingesetzt und arretiert ist.

2. System nach Anspruch 1, **dadurch gekennzeichnet, dass** zur Prüfung der Laserstrahlungsquelle (15) des Partikelmessgerätes (14) die von dieser abgegebene Strahlungsstärke mittels des Kalibrierdetektors (11) messbar ist und die gemessenen Werte in der elektronischen Steuer- und Recheneinheit (9) der Kalibriereinheit (1) anzeigbar sind.

3. System nach einem der Ansprüche 1 oder 2, **dadurch gekennzeichnet, dass** zur Prüfung mindestens eines Detektors (16) des Partikelmessgerätes (14) vom Kalibrierstrahler (10) eine Strahlung mit einer vorgegebenen Stärke als Sollwert abgegeben und mittels des Detektors (16) messbar ist und die gemessenen Werte in der elektronischen Steuer- und Recheneinheit (17) des Partikelmessgerätes (14) im Ergebnis eines Ist-/Sollwert-Vergleiches verarbeitet und dem Bediener als Korrekturempfehlung anzeigt werden.

4. System nach einem der Ansprüche 1 bis 3, **dadurch gekennzeichnet, dass** Strahlungsquelle (15) und/oder Detektor (16) nachjustierbar sind.

5. System nach einem der Ansprüche 1 bis 4, **dadurch gekennzeichnet, dass** Laserstrahlungsquelle (15) oder ein Detektor (16) des Partikelmessgerätes (14) entweder einzeln oder in Kombination in zeitlicher Reihenfolge nacheinander überprüfbar sind.

6. System nach einem der Ansprüche 1 bis 5, **dadurch gekennzeichnet, dass** die Ergebnisse der Prüfung der Strahlungsquelle (15) des Partikelmessgerätes (14) an der Kalibriereinheit (1) über die Multifunktionsanzeige (8) visuell als farblich gekennzeichnete Bereiche "zu hohe Leistung", "zu geringe Leistung" und "Leistung korrekt" anzeigbar sind und ausgehend von diesen vom Bediener die Strahlungsstärke der Strahlungsquelle (15) bei zu hoher oder zu niedriger Leistung entsprechend dem Sollwert verändert wird.

7. System nach einem der Ansprüche 1 bis 6, **dadurch gekennzeichnet, dass** zur Prüfung eines Detektors (16) am Partikelmessgerät (14) die Betriebsart "Detektorkalibrierung" aktivierbar ist und die gemessene Strahlungsstärke im Anzeigefeld des Partikelmessgerätes (14) anzeigbar ist.

8. System nach einem der Ansprüche 1 bis 7, **dadurch gekennzeichnet, dass** jeder geprüfte Detektor (16) hinsichtlich der Empfindlichkeit automatisch nachregelbar ist.

9. System nach einem der Ansprüche 1 bis 8, **dadurch gekennzeichnet, dass** mehrere Detektoren (16) des Partikelmessgerätes (14) zeitlich nacheinander kalibriert werden.

10. System nach einem der Ansprüche 1 bis 8, **dadurch gekennzeichnet, dass** mehrere Detektoren (16) des Partikelmessgerätes (14) gleichzeitig kalibriert werden, wobei alle zu prüfenden Detektoren (16) vom Kalibrierstrahler (10) angestrahlt sind.

11. System nach einem der Ansprüche 1 bis 10, **dadurch gekennzeichnet, dass** bei einer kombinierten Prüfung zuerst die von der Strahlungsquelle (15) des Partikelmessgerätes (14) abgegebene Strahlungsstärke mittels des Kalibrierdetektors (11) messbar ist, danach sich die Strahlungsquelle (15) nach einer definierten Zeitdauer automatisch abschaltet und die Steuer- und Recheneinheit (9) der Kalibriereinheit (1) als Betriebsart "kombinierte Prüfung" erkennt und den Sollwert für die vom Kalibrierstrahler (10) abzugebende Strahlungsstärke berechnet, die nachfolgend vom Kalibrierstrahler (10) abgegeben und vom Detektor (16) gemessen wird, um bei Abweichungen vom Sollwert den Detektor (16) nachzujustieren.

12. System nach einem der Ansprüche 1 bis 11, **dadurch gekennzeichnet, dass** das Partikelmessgerät (14) mit einer Laserstrahlung im Wellenbereich elektromagnetischer Strahlung oder UV-Strahlung arbeitet.

13. System nach einem der Ansprüche 1 bis 12, **dadurch gekennzeichnet, dass** jeder Detektor (16) des Partikelmessgerätes (14) an einer oder an mehreren Kennlinienpunkten kalibrierbar ist, indem vom Kalibrierstrahler (10) sequentiell verschiedene Strahlungsstärken abgegeben werden.

14. System nach einem der Ansprüche 1 bis 13, **dadurch gekennzeichnet, dass** die Detektoren (16) seitlich im Partikelmessgerät (14), in die Messkammer (18) ragend, angeordnet sind und im Betriebszustand das in verschiedene Richtungen gestreute Licht der Laserstrahlungsquelle (15) in elektrische Signale umwandeln.

15. System nach einem der Ansprüche 1 bis 14, **dadurch gekennzeichnet, dass** der Kalibrierstrahler (10) des Kalibrierstiftes (1) mit einem Diffusor (4) ausgerüstet ist.
